(19)

Europäisches
Patentamt
European
Patent Office
Office européen
des brevets

(11) **EP 4 760 619 A1**

(12) **EUROPEAN PATENT APPLICATION**

(43) Date of publication:
**17.06.2026 Bulletin 2026/25**

(51) International Patent Classification (IPC):
*G06Q 20/36* (2012.01)    *G06Q 20/38* (2012.01)
*G06Q 20/42* (2012.01)    *H04L 9/32* (2006.01)

(21) Application number: **24307121.4**

(22) Date of filing: **16.12.2024**

(52) Cooperative Patent Classification (CPC):
**G06Q 20/363; G06Q 20/02; G06Q 20/3674;
G06Q 20/3825; G06Q 20/385; G06Q 20/425;
H04L 9/3236; H04L 9/3239; H04L 9/3247;
H04L 9/50**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **THALES DIS FRANCE SAS**
**92190 Meudon (FR)**

(72) Inventors:
• **FAHER, Mourad**
  **78160 Marly le Roi (FR)**
• **EL MAROUANI, Abdellah**
  **13011 Marseille (FR)**
• **BRUNA, Hugo**
  **13000 Praha (CZ)**

(74) Representative: **Quintero Romero, Manuel**
**Thales Dis France SAS**
**Intellectual Property Department**
**6, rue de la Verrerie**
**92190 Meudon (FR)**

(54) **SYSTEM AND METHOD FOR MANAGING ATTRIBUTES IN AN ELECTRONIC WALLET (EWALLET)**

(57)    A system (100) and method (400) for managing attributes (304) in an electronic Wallet (eWallet) (114) is disclosed. The method (400) includes transmitting a request corresponding to modify one or more attributes (304) to a credential issuer system (116). Further, the method (400) includes receiving an updated root hash and a signature corresponding to the one or more attributes (304) based on the request. The method (400) includes verifying the signature using a public key. The public key is stored on a public repository (120). Further, the method (400) includes updating the one or more attributes (304) based on the updated root hash and the signature.

*400*

Start 402

Transmit a request corresponding to modify one or more attributes to a credential issuer system. 404

Receive an updated root hash and a signature corresponding to the one or more attributes based on the request 406

Verify the signature using a public key. 408

Update the one or more attributes based on the updated root hash and the signature. 410

End 414

FIG. 4

**Description**

**FIELD OF THE INVENTION**

The present disclosure relates to a field of cryptography and digital wallets, and more specifically to a system and method for managing attributes in an electronic wallet (eWallet).

**BACKGROUND OF THE INVENTION**

In today's digital world, electronic identity wallets (eWallets) have become essential tools for securely managing personal identification data. The eWallet is a software-based system that securely stores users' payment information, credentials, and other forms of personal data to facilitate various transactions and interactions in the digital ecosystem. The eWallets are increasingly utilized for financial transactions, personal identification, and secure access to digital services. The eWallet can be used to store sensitive credentials such as driver's licenses, national IDs, and certifications, that often require periodic updates due to expiration or changes in user status. The credentials include attributes such as name, address, or expiration dates, that may need periodic updates or renewal to remain valid.

Further, Conventional methods for updating the attributes typically involve significant data exchanges between the wallet and the credential issuer, leading to inefficiencies, potential privacy breaches, and high network overhead. A key challenge lies in ensuring that the updates are secure, verifiable, and privacy-preserving while minimizing the risk of fraud or unauthorized modifications. However, the conventional methods struggle with scalability, as millions of eWallets with varied update schedules can overwhelm issuing systems, impacting user experience and system performance. Further, the conventional methods also lack mechanism to prevent unauthorized modifications or ensure the authenticity of updated credentials.

Therefore, there is a need for a method and system that addresses the above mentioned technical problems by securely updating and authenticating the attributes in the eWallet.

**SUMMARY**

The following embodiments presents a simplified summary in order to provide a basic understanding of some aspects of the disclosed invention. This summary is not an extensive overview, and it is not intended to identify key/critical elements or to delineate the scope thereof. Its sole purpose is to present some concepts in a simplified form as a prelude to the more detailed description that is presented later.

Some example embodiments disclosed herein provide a method for managing attributes in an electronic Wallet (eWallet), the method may include transmitting a request corresponding to modify one or more attributes to a credential issuer system. Further, the method includes receiving an updated root hash and a signature corresponding to the one or more attributes based on the request. The method further includes verifying the signature using a public key issued by the credential issuer system. The public key is stored on a public repository. Further, the method includes updating the one or more attributes based on the updated root hash and the signature.

According to some example embodiments, the method includes storing the one or more attributes in a merkle tree as hashed values. The merkle tree includes a root hash and a corresponding signature.

According to some example embodiments, receiving the updated root hash and the signature further include at least one of transmitting a pre-authorized code along with a secret acquired out of bound (OOB) and asserting holder binding to verify the authenticity of the eWallet and verifying and authenticating the eWallet and a user of the eWallet to verify the authenticity of the eWallet.

According to some example embodiments, updating the one or more attributes includes generating updated hash values corresponding to the one or attributes based on the updated root hash and generating an updated merkle tree based on the updated hash values and the signature.

According to some example embodiments, the method includes generating a proof of validity corresponding to the modification of the one or more attributes. The proof of validity is verified by the credential issuer system.

Some example embodiments disclosed herein provide a system for managing attributes in the eWallet, the system includes a processor. Further, the system includes a memory communicatively coupled to the processor. The memory stores processor-executable instructions, which, on execution, cause the processor to transmit a request corresponding to modify one or more attributes to a credential issuer system. The processor-executable instructions, which, on execution, further cause the processor to receive an updated root hash and a signature corresponding to the one or more attributes based on the request. The processor-executable instructions, which, on execution, cause the processor to verify the signature using a public key. The public key is stored on a public repository. The processor-executable instructions, which, on execution, further cause the processor to update the one or more attributes based on the updated root hash and the signature.

According to some example embodiments, the processor executable instruction further causes the processor to store the one or more attributes in a merkle tree as hashed values. The merkle tree includes a root hash and a corresponding signature.

According to some example embodiments, to receive the updated root hash and the signature, the processor executable instruction causes the processor to perform at least one of transmit a pre-authorized code along with a secret acquired out of bound (OOB) and asserting holder binding to verify the authenticity of the eWallet and verify and authenticate the eWallet and a user of the eWallet to verify the authenticity of the eWallet.

According to some example embodiments, to update the one or more attributes, the processor executable instruction causes the processor to generate updated hash values corresponding to the one or attributes based on the updated root hash and generate an updated merkle tree based on the updated hash values and the signature.

According to some example embodiments, the processor executable instruction further causes the processor to generate a proof of validity corresponding to the modification of the one or more attributes. The proof of validity is verified by the credential issuer system.

Some example embodiments disclosed herein provide a non-transitory computer-readable medium storing computer-executable instructions for managing attributes in an electronic wallet (eWallet), the computer-executable instructions configured for transmitting a request corresponding to modify one or more attributes to a credential issuer system. The computer-executable instructions configured for receiving an updated root hash and a signature corresponding to the one or more attributes based on the request. Further, the computer-executable instructions configured for verifying the signature using a public key. The public key is stored on a public repository. The computer-executable instructions configured for updating the one or more attributes based on the updated root hash and the signature.

According to some example embodiments, the computer-executable instructions configured for storing the one or more attributes in a merkle tree as hashed values. The merkle tree includes a root hash and a corresponding signature.

According to some example embodiments, receiving the updated root hash and the signature further include at least one of transmitting a pre-authorized code along with a secret acquired out of bound (OOB) and asserting holder binding to verify the authenticity of the eWallet and verifying and authenticating the eWallet and a user of the eWallet to verify the authenticity of the eWallet.

According to some example embodiments, updating the one or more attributes includes generating updated hash values corresponding to the one or attributes based on the updated root hash and generating an updated merkle tree based on the updated hash values and the signature.

According to some example embodiments, the computer-executable instructions configured for generating a proof of validity corresponding to the modification of the one or more attributes. The proof of validity is verified by the credential issuer system.

## DEFINITIONS

The term "eWallet" as used herein in the specification may refer to a digital application or service that allows users to store, manage, and use their financial and identity-related information securely and conveniently. The eWallet operates similarly to a traditional wallet but in a digital form, enabling various transactions without the need for physical cards, physical documents, or cash.

The term "merkle tree" as used herein in the specification may refer to a cryptographic data structure used in computer science and blockchain technology to efficiently and securely verify the integrity and consistency of data. The merkle tree is also known as a hash tree as it involves hashing data into a hierarchical structure.

The term "Root hash" as used herein in the specification may refer to the topmost hash in a cryptographic structure called a Merkle tree. A Merkle tree is a binary tree used to organize and verify data efficiently and securely. It plays a crucial role in cryptographic applications, such as digital identity systems, blockchain, and secure communication protocols.

The term "Attributes" as used herein in the specification may refer to specific pieces of information or data elements that define or describe an individual's identity, rights, or status. Attributes are central to identity verification and credential management processes. Attributes may include name, date of birth, gender, address, driver's license number, photo, memberships, etc.

The term "Public key" as used herein in the specification may refer to a cryptographic key that can be shared openly without compromising the security of its associated private key. The public key may be shared with others to encrypt messages, verify digital signatures, or enable secure interactions.

The term "Signature" as used herein in the specification may refer to a digital signature, which is a cryptographic method used to validate the authenticity and integrity of a message, document, or piece of data. Digital signatures serve as a secure and verifiable way to ensure that data has not been tampered with and comes from a legitimate source.

The term "Credential Issuer System" as used herein in the specification may refer to an entity or a technological infrastructure responsible for creating, managing, and issuing digital credentials to users for storage in their digital wallets.

The credentials can represent a wide range of data, such as identity attributes, certifications, or authorizations, and are used to verify a user's identity or entitlement when interacting with relying parties or services.

The term "Proof of Validity" as used herein in the specification may refer to a mechanism used to demonstrate that the validity period of an attribute or credential stored in the eWallet has been extended or updated in a secure and verifiable manner. The Proof of Validity propagation ensures that the updated credential can be trusted by relying parties without requiring the transmission of sensitive data.

The term "wallet services" as used herein in the specification may refer to secure, digital storage and management systems for financial and personal data on a smartphone or other connected devices.

The term "Transport Layer Security (TLS) session" as used herein in the specification may refer to a secure communication channel established using the TLS protocol. The TLS is a cryptographic protocol designed to provide secure communication over a network, typically the internet, ensuring the confidentiality, integrity, and authenticity of data exchanged between two parties.

The term "OpenID for Verifiable Credential Issuance (OpenID4VCI)" as used herein in the specification may refer to a protocol developed to standardize and secure the issuance of verifiable credentials (VCs) to users. The OpenID4VCI extends the widely used OpenID Connect (OIDC) framework to support the issuance, presentation, and management of digital credentials in a secure and interoperable manner.

## BRIEF DESCRIPTION OF DRAWINGS

The above and still further example embodiments of the present invention will become apparent upon consideration of the following detailed description of embodiments thereof, especially when taken in conjunction with the accompanying drawings.

FIG. 1 illustrates a block diagram of an exemplary system for managing attributes in an Electronic Wallet (eWallet), in accordance with an exemplary embodiment.

FIG. 2 illustrates a block diagram of various modules within a memory of the system managing attributes in the eWallet, in accordance with an exemplary embodiment.

FIG. 3 illustrates a block diagram of a merkle tree stored in the eWallet, in accordance with an exemplary embodiment.

FIG. 4 illustrates an exemplary flow chart of a method for managing attributes in the eWallet, in accordance with an exemplary embodiment.

FIG. 5 illustrates an exemplary computing system for implementation of a method for managing attributes in the eWallet, in accordance with an exemplary embodiment.

The figures illustrate embodiments of the invention for purposes of illustration only. One skilled in the art will readily recognize from the following description that alternative embodiments of the structures and methods illustrated herein may be employed without departing from the principles of the invention described herein.

## DETAILED DESCRIPTION

In the following description, for purposes of explanation, numerous specific details are set forth in order to provide a thorough understanding of the present invention. It will be apparent, however, to one skilled in the art that the present invention can be practiced without these specific details. In other instances, systems, apparatuses, and methods are shown in block diagram form only in order to avoid obscuring the present invention.

Reference in this specification to "one embodiment" or "an embodiment" or "example embodiment" means that a particular feature, structure, or characteristic described in connection with the embodiment is included in at least one embodiment of the present invention. The appearance of the phrase "in one embodiment" in various places in the specification are not necessarily all referring to the same embodiment, nor are separate or alternative embodiments mutually exclusive of other embodiments. Further, the terms "a" and "an" herein do not denote a limitation of quantity, but rather denote the presence of at least one of the referenced items. Moreover, various features are described which may be exhibited by some embodiments and not by others. Similarly, various requirements are described which may be requirements for some embodiments but not for other embodiments.

Some embodiments of the present disclosure will now be described more fully hereinafter with reference to the accompanying drawings, in which some, but not all, embodiments of the invention are shown. Indeed, various embodiments of the invention may be embodied in many different forms and should not be construed as limited to the embodiments set forth herein; rather, these embodiments are provided so that this disclosure will satisfy applicable legal requirements. Like reference numerals refer to like elements throughout.

The terms "comprise", "comprising", "includes", or any other variations thereof, are intended to cover a non-exclusive inclusion, such that a setup, device, or method that comprises a list of components or steps does not include only those components or steps but may include other components or steps not expressly listed or inherent to such setup or device or method. In other words, one or more elements in a system or apparatus proceeded by "comprises... a" does not, without more constraints, preclude the existence of other elements or additional elements in the system or method.

The embodiments are described herein for illustrative purposes and are subject to many variations. It is understood that various omissions and substitutions of equivalents are contemplated as circumstances may suggest or render expedient but are intended to cover the application or implementation without departing from the spirit or the scope of the present invention. Further, it is to be understood that the phraseology and terminology employed herein are for the purpose of the description and should not be regarded as limiting. Any heading utilized within this description is for convenience only and has no legal or limiting effect.

In the rapidly evolving landscape of digital identity, technology has played a crucial role in enhancing the security, privacy, and convenience of managing personal identification data. One significant advancement in this field is the development of Electronic Identification (eID) Wallets. The digital wallets (eWallets) securely store personal credentials such as driver's licenses, passports, and other forms of identification, allowing users to present verified attributes via their mobile devices. This transformation is driven by protocols like OpenID Connect for Verifiable Credentials (OpenID4VCI), ensuring secure, authenticated exchanges between users and relying parties.

The reissuance of personal identification data after initial provisioning in the eWallets presents multiple challenges. The challenges may include scalability concerns due to the need for updates across millions of wallets, each with varying attribute validity periods. Additionally, transferring unchanged data during updates leads to unnecessary consumption of network bandwidth, impacting performance and raising environmental concerns. Another critical issue is the exposure of sensitive personal information (PII) during updates, which can lead to privacy infringements.

Further, the conventional methods of updating identification data often involve complex reissuance processes, leading to inefficiencies, potential privacy risks, and excessive network bandwidth usage. Moreover, current systems face difficulties in generating proof of attribute updates in a secure and efficient manner resulting in vulnerabilities, such as the risk of interception during transactions using pre-authorized codes in QR codes or deep links. The conventional method and systems also suffer from asynchronous protocol upgrades that may cause user experience (UX) degradation, especially under high load conditions during identity proofing or credential issuance. To address these issues, there is a growing need for a solution that enables seamless, efficient, and secure updates of personal attributes within eID Wallets, minimizing data exposure and enhancing user experience.

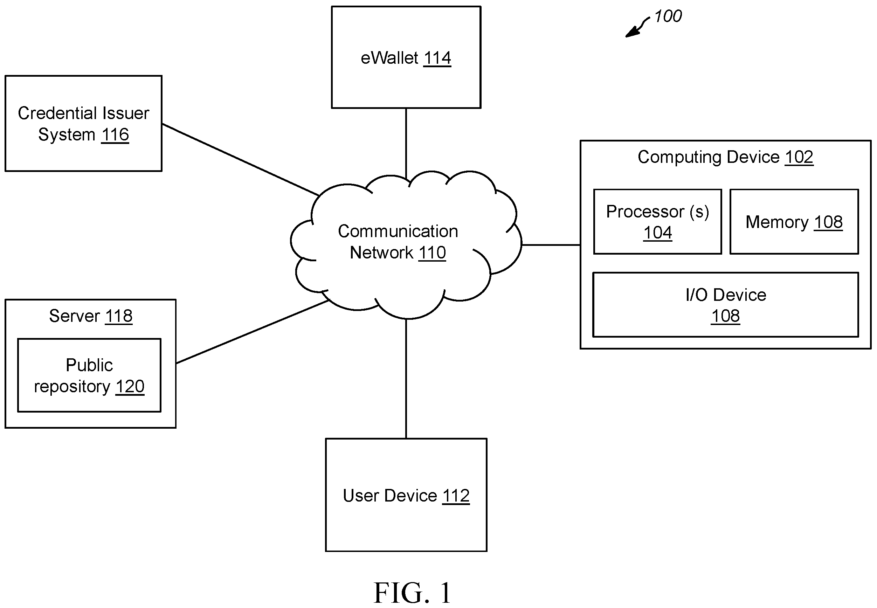

Embodiments of the present disclosure may provide a method and a system for maintain attributes in the eWallets. The need for a robust solution that allows secure, self-updating capabilities within the eWallet, without the necessity of continuous data exchanges between a credential issuer system and the wallet, is clear. Such a solution would improve scalability, optimize network performance, protect user privacy, and enhance the overall user experience. The method provides a secure and efficient way to update the credentials stored in the eWallets by employing the OpenID4VCI protocols and the merkle tree, are described with reference to FIG. 1 to FIG. 5 as detailed below.

FIG. 1 illustrates a block diagram of an exemplary system 100 managing attributes in the eWallet 114, is illustrated, in accordance with an embodiment of the present disclosure. The system 100 may include a computing device 102, a user device 112, the eWallet 114, the credential issuer system 116, and a server 118 communicatively coupled to each other through a wired or wireless communication network 110. The computing device 102 may include a processor 104, a memory 106 and an input/output (I/O) device 108.

In an embodiment, examples of processor(s) 104 may include, but are not limited to, microcontrollers, microprocessors, digital signal processors (DSPs), application-specific integrated circuits (ASICs), field-programmable gate arrays (FPGAs), system-on-chip (SoC) components, or any other suitable programmable logic devices. The processor 104 is responsible for executing the instructions stored in the memory 106 to carry out the functionality of the system 100, including presenting candidates to a user through the online platform 114.

In an embodiment, the memory 106 may store instructions and data, including one or more modules that, when executed by the processor 104, may cause the processor 104 to present candidates to the user, as will be discussed in greater detail herein below. In an embodiment, the memory 106 may be a non- volatile memory or a volatile memory. In an embodiment, the memory 106 may also store a single module or a combination of different modules to present candidates to a user through the online platform 114. Examples of non-volatile memory may include but are not limited to, a flash memory, a Read Only Memory (ROM), a Programmable ROM (PROM), Erasable PROM (EPROM), and Electrically EPROM (EEPROM) memory. Further, examples of volatile memory may include but are not limited to, Dynamic Random Access Memory (DRAM), and Static Random-Access memory (SRAM).

In an embodiment, the I/O device 108 may comprise of variety of interface(s), for example, interfaces for data input and output devices, and the like. The I/O device 108 may facilitate inputting of instructions by a user communicating with the computing device 102. In an embodiment, the I/O device 108 may be wirelessly connected to the computing device 102 through wireless network interfaces such as Bluetooth®, infrared, or any other wireless radio communication known in the art. In an embodiment, the I/O device 108 may be connected to a communication pathway for one or more components of the computing device 102 to facilitate the transmission of inputted instructions and output results of data generated by various components such as, but not limited to, processor(s) 104 and memory 106.

In an embodiment, the eWallet 114 may securely store a plurality of documents and user Identification such as, driver's license, government Identification, etc. The eWallet 114 is a digital application that securely stores a user's payment information, digital credentials, and other sensitive data on the user devices 112 such as smartphones, tablets, or computers. The eWallet 114 may function as a digital equivalent of a physical wallet, allowing users to make electronic transactions, store digital identification, and access various online services seamlessly. The eWallet 114 enable users to verify their identities for various online services, such as banking, travel, or accessing government services. In some embodiments, the eWallet 114 may exist standalone or be integrated in a Secure Element such as, Embedded Secure Element (eSE), Embedded Subscriber Identity Module (eSIM/SIM), Embedded Universal Integrated Circuit Card (eUICC), etc. of the user device 112. The eWallet 114 may communicate with the computing device 102, User device 112, the credential issuer authority 116 and the server 118 via the communication network 110. Further, the eWallet 114 may receive instructions from the computing device 102 to perform specific functions such as, extracting credentials and verifying the credentials. The credentials or documents stored within the eWallet 114 may be verified and authenticated by the credential issuer authority 116.

In an embodiment, the credential issuer system 116 is an entity responsible for creating, managing, and updating digital credentials for users. The credentials may include identity documents such as digital driver's licenses, passports, national IDs and other personal attributes stored within the eWallet 114. The credential issuer system 116 plays a pivotal role in securely provisioning, authenticating, and updating the credentials that users rely on for digital identity verification. In some embodiments, the credential issuer system 116 may be a system used by an authority such as vehicle office for maintaining the driver license of user and other organizations either government, private, NGOs, corporations, etc. Further, the Credential Issuer System 116 is responsible for authenticating the user such as through biometric verification, pre-authorized codes, or a secret acquired out of bound (OOB) and asserting holder binding before allowing updates or issuing credentials. In some embodiments, the Credential Issuer System 116 leverages advanced cryptographic techniques, such as Merkle Tree to enable efficient credential updates and secure exchanges between the credential issuer system 116 and the eWallet 114, reducing bandwidth usage and enhancing user experience.

In an embodiment, the server 118 may be enabled in a remote cloud server or a colocated server and may include a public repository 120 for retaining various data inputs and outputs necessary for operations of the system 100. In an embodiment, the server 118 may store data input by the user device 112 or output generated by the computing device 102 and the credential issuer system 116. It is to be noted that within the public repository 120 is configured to store a public key for the use of the computing system 102 and the eWallet 114. In an embodiment, the computing device 102 may be communicably coupled with the server 118 through the communication network 110.

In an embodiment, the communication network 110 may be a wired or a wireless network or a combination thereof. The communication network 110 can be implemented as one of the different types of networks, such as but not limited to, ethernet IP network, intranet, local area network (LAN), wide area network (WAN), or a Metropolitan Area Network (MAN). Various devices in the system 100 may be configured to connect to the communication network 110, in accordance with various wired and wireless communication protocols. Examples of such wired and wireless communication protocols may include, but are not limited to, a Transmission Control Protocol and Internet Protocol (TCP/IP), User Datagram Protocol (UDP), Hypertext Transfer Protocol (HTTP), File Transfer Protocol (FTP), Zig Bee, EDGE, IEEE 802.11, light fidelity (Li-Fi), 802.16, IEEE 802.11s, IEEE 802.11g, multi-hop communication, wireless access point (AP), device to device communication, cellular communication protocols, and Bluetooth (BT) communication protocols. Further the communication network 110 can include a variety of network devices, including routers, bridges, servers, computing devices, storage devices, and the like.

In an embodiment, the computing device 102 may receive a plurality of inputs from the user device 112 through the communication network 110. In an embodiment, the computing device 102 and the user device 112 may be a computing system, including but not limited to, a laptop computer, a desktop computer, a notebook, a workstation, a server, a portable computer, a handheld or a mobile device. The user device 112 communicates with the computing device 102, the eWallet 114 and the credential issuer system 116 over the communication network 110 to submit input and receive output, facilitating a personalized user experience. The computing device 102 may either be embedded in the user device 112, eWallet 114 or exist as a standalone device working in conjunction with the user device 112 and the eWallet 114 to process the data.

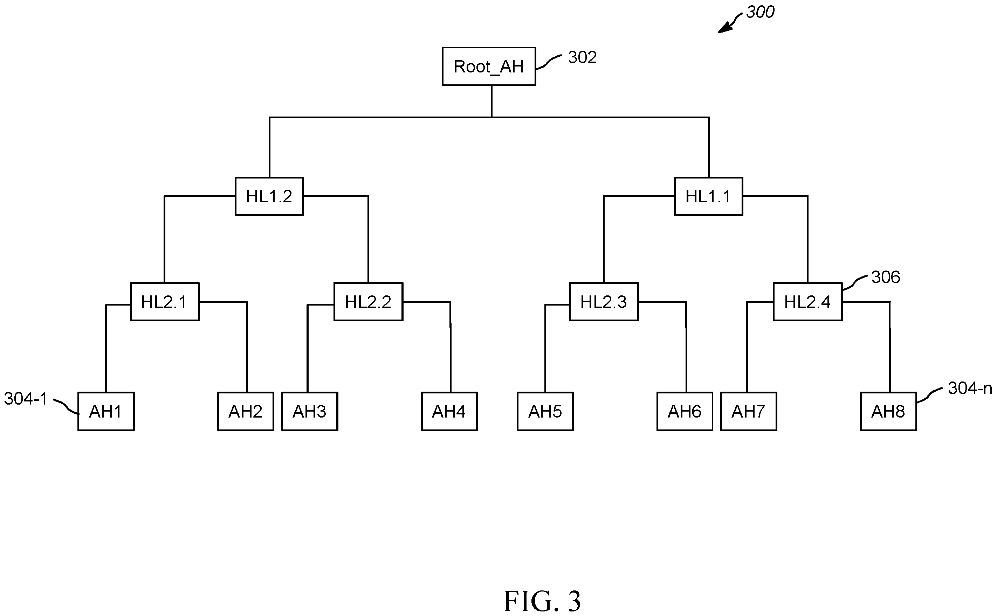

In an embodiment, the computing device 102 may perform various processing in order to manage attributes in the eWallet 114. The computing device 102 may transmit a request corresponding to modify one or more attributes to the credential issuer system 116. The request may be inputted by the user via the user device 112 or the request may be transmitted automatically, when any attribute is about to expire. For example, the request may correspond to update an "attribute 5" in the eWallet 114. The attributes may correspond to credentials of the document stored in the eWallet 114. For example, the attributes may correspond to a name, license number, photo, signature, address, expiry date, etc for a driver's license. In some embodiments, the attributes are stored in a merkle tree in the eWallet 114 as explained in detail in FIG. 3.

Upon receiving the request to modify the one or more attributes, the credential issuer system 116 may identify the eWallet 114 and authenticate the user. In another embodiment, the credential issuer system 116 may also receive the pre-authorization code along with a secret acquired out of bound (OOB) and asserting holder binding from the eWallet 114. Further, the credential issuer system 116 may look up the corresponding one or more attributes in the merkle tree stored in the eWallet 114. The credential issuer system 116 then updates the one or more attributes based on the request. Further, the credential issuer system 116 computes a signature and an updated root hash corresponding to the updated one or more attributes. The computing device 102 may further receive the updated root hash and the signature corresponding to the one or more attributes based on the request.

In an embodiment, the credential issuer system 116 may update the updated root hash with the root hash in the merkle tree. The credential issuer system 116 generate a public key corresponding to the signature and stores the public key on the public repository 120. The computing device 102 may then verify the signature using the public key. In an embodiment, the computing device 102 may host a root certification authority public key such as Root_CA_PuK, to ensure the verification of the signature. Additionally, the signature may be verified offline. The computing device 102 then updates the one or more parameters corresponding to the signature and the updated root hash. In some embodiments, the computing device 102 generates an updated hash values corresponding to the one or attributes based on the updated root hash. Further, the computing device 102 generates an updated merkle tree based on the updated hash values and the signature.

In some embodiments, the computing device 102 may generate a proof of validity corresponding to the modification of the one or more attributes. The proof of validity is verified by the credential issuer system 116. The modification in the one or more attributes may be verified by one or more entity using the proof of validity issued by the credential issuer system 116.

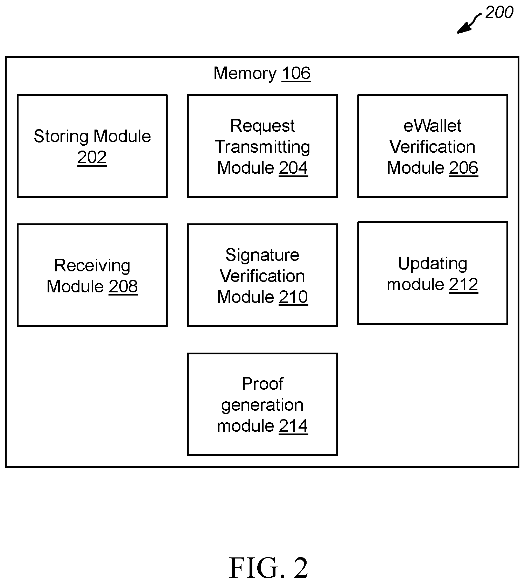

FIG. 2 illustrates a functional block diagram 200 of various modules within the memory 106 of the system 100 for managing attributes in the eWallet 114, in accordance with an embodiment of the present disclosure. In an embodiment, the memory 106 may include a storing module 202, a request transmitting module 204, an eWallet verification module 206, a receiving module 208, a signature verification module 210, an updating module 212 and a proof generation module 214.

The storing module 202 may be configured for storing the one or more attributes in a merkle tree as hashed values. The merkle tree includes a root hash and a corresponding signature. The storing module 202 is responsible for storing user attributes, such as personal details (name, date of birth, license number, etc.), securely. The Merkle Tree structure is used to store these attributes as hashed values. Each attribute such as name, address, license expiry date is individually hashed using a cryptographic hash function such as SHA-256. After hashing the individual attributes, the storing module 202 combines these hashes in pairs to generate the next level of the tree. The storing module 202 combine hashes until a single Root Hash is generated at the top of the merkle tree. Further, the storing module 202 also generates a digital signature for the Root Hash using a private key. The signature is crucial because it ensures the authenticity and integrity of the attributes.

The request transmitting module 204 may be configured for transmitting a request corresponding to modify one or more attributes to a credential issuer system 116. The request transmitting module 204 is responsible for sending requests to modify user attributes. The attributes are part of the data stored securely within the eWallet 114, using a Merkle Tree structure. When a user or the eWallet 114 identifies the need to update or modify one or more attributes such as updating an address, name, or license expiry date, the request transmitting module 204 is triggered. The request transmitting module 204 prepares a request that details the specific attribute to be modified. In some embodiments, the request may include Identifier of the attribute to be updated such as Address, Phone Number, etc., a new value to be set for the attribute, a signature to authorize the change, ensuring that the request is legitimate and coming from an authenticated source, etc.

The eWallet verification module 206 may be configured for verifying the authenticity of the eWallet 114. The eWallet verification module 206 is responsible for confirming that the eWallet 114 is genuine and belongs to the rightful user. The verification process is crucial to prevent unauthorized access and ensure that sensitive information stored within the eWallet 114 is secure. In an embodiment, the authenticity of the eWallet 114 may be verified by transmitting a pre-authorized code along with a secret acquired out of bound (OOB) and asserting holder binding to the credential authority system 116. A pre-authorized code is a unique code that is generated ahead of time and is known only to the eWallet 114 and the credential authority system 116. Further, the OOB verification involves using a separate communication channel different from the main channel used for the pre-authorized code to verify the identity of the eWallet holder. By using both the pre-authorized code and the OOB verification, the system significantly reduces the risk of fraud or unauthorized access.

The receiving module 208 may be configured for receiving an updated root hash and a signature corresponding to the one or more attributes based on the request. The receiving module 208 is responsible for handling the updated information that comes back after a modification request has been processed by the credential issuer system 116. Specifically, the receiving module 208 deals with receiving an updated root hash and a corresponding signature related to the attributes stored in the eWallet 114. In an embodiment, When one or more attributes are modified, the hashes of the affected nodes and any parent nodes up to the root need to be recalculated. The receiving module 208 receives this newly computed Root Hash, which represents the updated state of all the attributes after the changes. Along with the updated root hash, a digital signature is provided. The signature is usually created by the credential issuer system 116.

The signature verification module 210 is configured for verifying the signature using a public key. The public key is stored on a public repository 120. The signature verification module 210 is responsible for ensuring the authenticity and integrity of data, particularly in systems where digital credentials or sensitive attributes are managed securely. When a credential issuer system 116 such as a government agency, bank, or trusted authority sends sensitive data such as an updated root hash, the credential issuer system 1116 generates a digital signature using a private key. The signature serves as a cryptographic proof that the data is genuine and was indeed issued by the trusted source. The signature is tied to both the data being sent such as the root hash and the issuer's private key, making it unique and secure. To verify the authenticity of the signature and the root hash, the signature verification module 210 use the corresponding public key of the credential issuer system 116. In an embodiment, the computing device 102 may host a root certification authority public key such as Root_CA_PuK, to ensure the verification of the signature. Additionally, the signature may be verified offline. The public key is the counterpart to the issuer's private key and is used to validate the digital signature. Further, the public repository 120 is a trusted, publicly accessible storage system where public keys are made available for entities that need to verify signatures.

The updating module 212 is configured for updating the one or more attributes based on the updated root hash and the signature. Further, the updating module 212 receives the updated hash values corresponding to the one or attributes based on the updated root hash. The updating module 212 then generates an updated merkle tree based on the updated hash values and the signature. The updating module 212 is responsible for incorporating changes to user attributes in a secure and verifiable manner, involving updating the existing Merkle Tree structure with new data, ensuring that the integrity and authenticity of the attributes are maintained. The updating module 212 uses the updated hash values to regenerate the affected parts of the Merkle Tree. In some embodiments, the updating module 212 places the new hash values at the corresponding leaf nodes and recalculates all the hash levels and a new root hash until an updated merkle tree is generated. Further, the updated module 212 compares the new root hash with updated root hash to authenticate the updated merkle tree. Once verification is successful, the updating module 212 replaces the old Merkle Tree with the updated merkle tree in the eWallet 114.

The proof generation module 214 is configured for generating a proof of validity corresponding to the modification of the one or more attributes. The proof of validity is verified by the credential issuer system 116. The proof generation module 214 is responsible for creating a verifiable cryptographic proof whenever one or more attributes in the eWallet 114 are updated. The proof serves as evidence that the modifications were made correctly and are endorsed by a trusted authority, ensuring data integrity and trustworthiness. In an embodiment, After the updating module 212 receives an updated Root Hash and the corresponding signature from the credential issuer system 116, the updated attributes are securely stored in the eWallet 114. The proof generation module 214 then generates a proof of validity for the modified attributes. The proof is essentially a cryptographic statement that confirms the attributes have been updated correctly and are legitimate. The proof of validity allows any verifying party, such as a credential issuer system 116 or a relying party such as a service provider or verifier to confirm the updated attributes are genuine, updates were authorized by the credential issuer system 116, integrity of the data has been maintained, etc. Once validated, the proof of validity may be stored securely within the eWallet 114 for future use.

It should be noted that all such aforementioned modules 202-214 may be represented as a single module or a combination of different modules. Further, as will be appreciated by those skilled in the art, each of the modules 202-214 may reside, in whole or in parts, on one device or multiple devices in communication with each other. In some embodiments, each of the modules 202-214 may be implemented as dedicated hardware circuit comprising custom application-specific integrated circuit (ASIC) or gate arrays, off-the-shelf semiconductors such as logic chips, transistors, or other discrete components. Each of the modules 202-214 may also be implemented in a programmable hardware device such as a field programmable gate array (FGPA), programmable array logic, programmable logic device, and so forth. Alternatively, each of the modules 202-214 may be implemented in software for execution by various types of processors (e.g. processor 104). An identified module of executable code may, for instance, include one or more physical or logical blocks of computer instructions, which may, for instance, be organized as an object, procedure, function, or other construct. Nevertheless, the executables of an identified module or component need not be physically located together but may include disparate instructions stored in different locations which, when joined logically together, include the module and achieve the stated purpose of the module. Indeed, a module of executable code could be a single instruction, or many instructions, and may even be distributed over several different code segments, among different applications, and across several memory devices.

As will be appreciated by one skilled in the art, a variety of processes may be employed for managing attributes of the credentials in the eWallet 114. For example, the exemplary system 100 and the associated computing device 102 may manage the attributes in the eWallet 114 by the processes discussed herein. In particular, as will be appreciated by those of ordinary skill in the art, control logic and/or automated routines for performing the techniques and steps described herein may be implemented by the system 100 and the associated computing device 102 either by hardware, software, or combinations of hardware and software. For example, suitable code may be accessed and executed by the one or more processors on the system 100 to perform some or all of the techniques described herein. Similarly, application specific integrated circuits (ASICs) configured to perform some, or all of the processes described herein may be included in the one or more processors on the system 100.

FIG. 3 illustrates a block diagram of a merkle tree 300 stored in the eWallet 114, in accordance with an exemplary embodiment. The merkle tree 300 include a plurality of attributes 304 of the documents stored in the eWallet 114. FIG. 3 is explained in conjunction with FIGs. 1 and 2.

In an embodiment, the merkle tree 300 is a tree structure in which every leaf node is labelled with a cryptographic hash of a data block, and every non-leaf node is labelled with a cryptographic hash of the labels of its child nodes. The merkle tree 300 structure is widely used in blockchain, cryptocurrencies, and data integrity applications due to its ability to efficiently verify the integrity and consistency of large datasets. The merkle tree 300 may include leaf nodes corresponding to the attributes of the document stored in the eWallet 114. The leaf nodes may include attributes AH1 304-1, AH-2 304-2.......AH-n 304-n (cumulatively referred as attributes 304) corresponding to pieces of personal information such as name, date of birth, or license expiry date. In an exemplary embodiment, the attribute AH-1 304-1 may represent the hash of "Name.", the attribute AH-2 304-2 may represent the hash of "License Expiry Date.", so on and so forth. The attributes 304 are generated by hashing the actual data values using a cryptographic hash function such as SHA-256.

In an embodiment, the merkle tree 300 may include a plurality of hash level 306 such as HL2.1, HL2.3. HL1.1, HL1.2, etc. The hash levels 306 represent different layers within the merkle tree 300, each consisting of nodes that store cryptographic hashes. The hash levels are organized hierarchically, starting from the leaf nodes at the bottom (representing the hashed data) up to the root node at the top (representing a single hash summarizing the entire tree). The hash levels 306 such as HL2.1 to HL 2.4 each linked to specific attributes 304 such as AH1 to AH8. Further, the hash levels 306 such as HL1.1 and HL1.2 links the hash levels 306 such as HL2.1 to HL 2.4 to the root hash 302. The hash level 306 such as HL1.1 and HL1.2 may be calculated by taking pairs of nodes from Hash Level such as HL2.1 and HL2.2 and hashing them to form a higher level, as depicted in equation 1:

$$HL1.1 = Hash(HL2.1 || HL2.2) \qquad \dots \qquad 1$$

Further, the hash level 306 such as HL2.1 to HL2.4 may be calculated by concatenating and hashing two adjacent leaf nodes, as in equation 2:

$$HL2.1 = Hash(AH1 || AH2) \qquad \dots \qquad 2$$

Further, the merkle tree 300 include a root hash 302 that is a cryptographic summary of all the underlying data. Any change in the data may change the Root Hash, making it an essential part of verifying data integrity. The root hash 302 is computed by hashing the two nodes from the previous level such as HL1.2 and HL1.2, as depicted in equation 3:

$$Root\_AH = Hash(HL1.1 || HL1.2) \qquad \dots \qquad 3$$

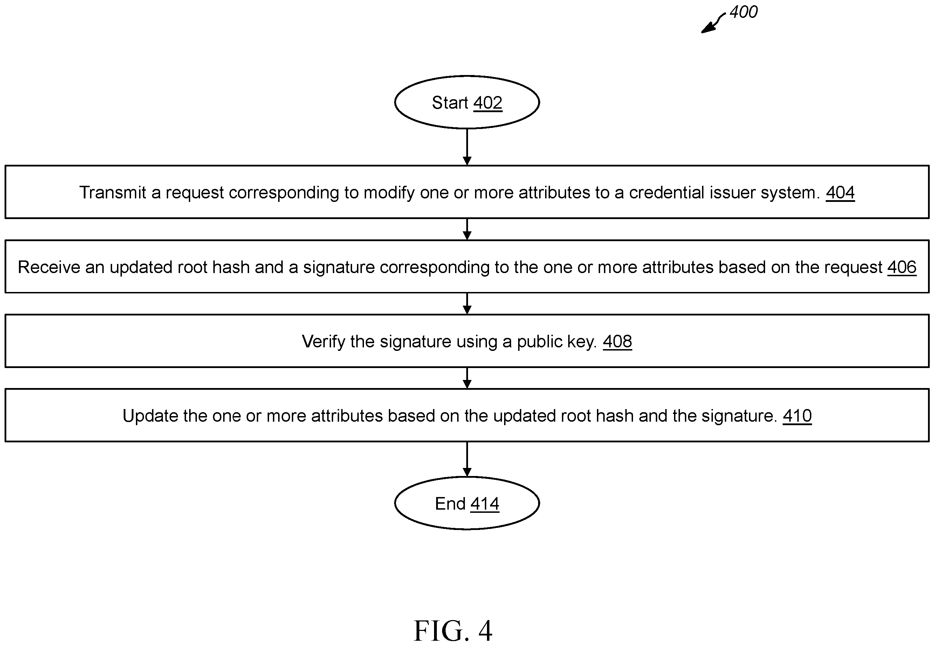

FIG. 4 illustrates an exemplary flow chart of a method 400 for managing attributes in the eWallet 114, in accordance with an example embodiment. It will be understood that each block of the flow diagram of the method 400 may be implemented by various means, such as hardware, firmware, processor, circuitry, and/or other communication devices associated with execution of software including one or more computer program instructions. For example, one or more of the procedures described above may be embodied by computer program instructions. In this regard, the computer program instructions which embody the procedures described above may be stored by a memory of the computing device 102, employing an embodiment of the present disclosure and executed by the processor 104. As will be appreciated, any such computer program instructions may be loaded onto a computer or other programmable apparatus (for example, hardware) to produce a machine, such that the resulting computer or other programmable apparatus implements the functions specified in the flow diagram blocks. These computer program instructions may also be stored in a computer-readable memory that may direct a computer or other programmable apparatus to function in a particular manner, such that the instructions stored in the computer-readable memory produce an article of manufacture the execution of which implements the function specified in the flowchart blocks. The computer program instructions may also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flow diagram blocks.

Accordingly, blocks of the flow diagram support combinations of means for performing the specified functions and combinations of operations for performing the specified functions for performing the specified functions. It will also be understood that one or more blocks of the flow diagram, and combinations of blocks in the flow diagram, may be implemented by special purpose hardware-based computer systems which perform the specified functions, or combinations of special purpose hardware and computer instructions.

FIG. 4 is explained in conjunction with elements from FIGs. 1, 2, and 3. At step 402, the method 400 is initiated. The method 400, at step 404 may include transmitting a request corresponding to modify one or more attributes 304 to a credential issuer system 116. In an embodiment, the eWallet 114 communicates with the credential issuer system 116 to initiate an update or modification of specific data or attributes stored in the eWallet 114. The eWallet 114 may store the plurality of documents in the form of merkle tree 300. The credentials of the documents are stored as hash values attributes 304 in the merkle tree 300.

The method 400, at step 406 may include receiving an updated root hash and a signature corresponding to the one or more attributes 304 based on the request. The updated root hash corresponds to the modification of the one or more attributes 304. The signature may be a cryptographic endorsement by the credential issuer system 116 such as a government agency or certification authority. When one or more attribute 304 are modified by the credential issuer system 116, the structure of the Merkle tree 300 changes, resulting in a new root hash. The updated root hash reflects the modified attributes while maintaining the integrity of the entire data structure.

The method 400, at step 408, may include verifying the signature using a public key. The public key is stored on a public repository 120. In an embodiment, the computing device 102 may host a root certification authority public key such as Root_CA_PuK, to ensure the verification of the signature. Additionally, the signature may be verified offline. In simpler words, the signature is generated when the credential issuer system 116 uses its private key to sign data, such as the updated root hash. The signature acts as proof of authenticity and integrity, ensuring that the data originates from the credential issuer system 116 and has not been tampered with. To verify the signature, the corresponding public key is required. The public key is mathematically linked to the private key, enabling verification without exposing the private key itself. he public repository (120) is a trusted storage system where the credential issuer publishes its public key. The Public repository 120 ensures that the public key is accessible to any entity that needs to verify the credential issuer system 116 signatures, including eWallets 114 and relying parties. Further, the public depository 120 acts as a single source of truth, reducing the risk of fraud or the use of counterfeit keys.

The method 400, at step 410, may include updating the one or more attributes 304 based on the updated root hash and the signature. In an embodiment, the eWallet 114 receives the updated root hash and the corresponding signature from the credential issuer system 116. The updated root hash and the corresponding signature confirm the modification to the one or more attributes 304 based on the request. Before applying any updates, the eWallet 114 verifies the signature using the public key. Further, the eWallet 114 locally updates the one or more attributes 304 in the merkle tree 300. The eWallet 114 computes a new root hash from the recalculated Merkle tree. Further, the eWallet 114 compares locally computed root hash with the updated root hash received from the credential issuer system 116. The method 400, ends at step 412.

In an exemplary embodiment, Alex has a digital driver's license stored in an eWallet on their smartphone. The digital license is issued by Department of Motor Vehicles (DMV) and includes a set of attributes such as name, date of birth, license number, and expiry date. When the digital license is first issued, the DMV creates a Merkle tree with the license's attributes. The merkle tree is signed by the DMV to ensure authenticity. The eWallet also stores the signed Merkle root and a corresponding root hash as proof of the data's integrity and includes a public key to verify future updates.

In an embodiment, the expiration date of Alex's license approaches, the eWallet notifies Alex of the upcoming expiry and prompts Alex to request an update. Alex submits the request to the DMV through the eWallet application, which may involve additional verification steps such as biometric authentication. The DMV receives the request, identifies Alex's eWallet, verifies the request, and checks if any restrictions apply. The DMV then updates the expiry date on its side, generates a new root hash for the updated attributes, and signs it with a private key. The updated root hash and signature are further transmitted to Alex's eWallet. Upon receiving the update, the eWallet verifies the DMV's signature using the stored public key, confirms the updated root hash, and applies the change. Now, Alex's digital driver's license shows the new expiry date, and any third party may verify its authenticity using the signed root hash without seeing the raw data.

In some embodiments, Alex may present the updated digital license to a law enforcement officer or other relying parties as proof of a valid driver's license. The relying party may verify the integrity and authenticity of the updated license by checking the root hash and signature against the DMV's public record.

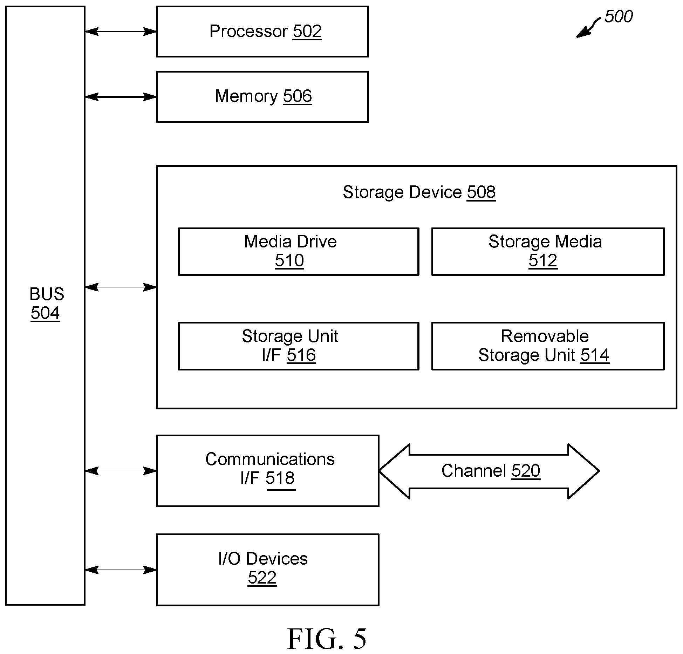

FIG. 5 illustrates an exemplary computing system 500 for implementation of a method for managing attributes in an electronic wallet (eWallet), in accordance with an exemplary embodiment.

The computing system 500 may represent, for example, an end device that involves network connection. In an embodiment, the end device may include, but not limited to a smart phone, a laptop computer, a desktop computer, a workstation, a portable computer, a handheld, or a mobile device. In an embodiment, the computing system 500 may represent, for example, an end-device with the provision of mobility. Examples of the end-device with the provision of mobility may include but not limited to a Telematics Control Unit (TCU), an infotainment system, a Vehicle-to-Everything Device (V2X) device, an On-board Diagnostics Device (OBD), an Advanced Driver Assistance Systems (ADAS) sensor, and the like. The computing system 500 may include one or more processors, such as a processor 502 that may be implemented using a general or special purpose processing engine such as, for example, a microprocessor, microcontroller or other control logic. In this example, the processor 502 is connected to a bus 504 or other communication medium. In an embodiment, examples of processor 502 may include, but are not limited to, microcontrollers, microprocessors, digital signal processors (DSPs), application-specific integrated circuits (ASICs), field-programmable gate arrays (FPGAs), system-on-chip (SoC) components, or any other suitable programmable logic devices, system-on-a-chip processors or other future processors.

The computing system 500 may also include a memory 506 (main memory), for example, Random Access Memory (RAM) or other dynamic memory, for storing information and instructions to be executed by the processor 502. The memory 506 also may be used for storing temporary variables or other intermediate information during execution of instructions to be executed by the processor 502. The computing system 500 may likewise include a read only memory ("ROM") or other static storage device coupled to bus 504 for storing static information and instructions for the processor 502.

The computing system 500 may also include a storage device 508, which may include, for example, a media drive 510 and a removable storage interface 514. The media drive 510 may include a drive or other mechanism to support fixed or removable storage media, such as a hard disk drive, a floppy disk drive, a magnetic tape drive, an SD card port, a USB port, a micro-USB, an optical disk drive, a CD or DVD drive (R or RW), or other removable or fixed media drive. A storage media 512 may include, for example, a hard disk, magnetic tape, flash drive, or other fixed or removable medium that is read by and written to by the media drive 510. As these examples illustrate, the storage media 512 may include a computer-readable storage medium having stored there in particular computer software or data.

In some embodiments, the storage devices may include other similar instrumentalities for allowing computer programs or other instructions or data to be loaded into the computing system 500. Such instrumentalities may include, for example, a removable storage unit 514 and a storage unit interface 516, such as a program cartridge and cartridge interface, a removable memory (for example, a flash memory or other removable memory module) and memory slot, and other removable storage units and interfaces that allow software and data to be transferred from the removable storage unit 514 to the computing system 500.

The computing system 500 may also include a communications interface 518. The communications interface 518 may be used to allow software and data to be transferred between the computing system 500 and external devices. Examples of the communications interface 518 may include a network interface (such as an Ethernet or other NIC card), a communications port (such as for example, a USB port, a micro-USB port), Near field Communication (NFC), etc. Software and data transferred via the communications interface 518 are in the form of signals which may be electronic, electromagnetic, optical, or other signals capable of being received by the communications interface 518. These signals are provided to the communications interface 518 via a channel 520. The channel 520 may carry signals and may be implemented using a wireless medium, wire or cable, fiber optics, or another communications medium. Some examples of the channel 520 may include a phone line, a cellular phone link, an RF link, a Bluetooth link, a network interface, a local or wide area network, and other communications channels.

The computing system 500 may further include Input/Output (I/O) devices 522. Examples may include, but are not limited to a display, keypad, microphone, audio speakers, vibrating motor, LED lights, etc. The I/O devices 522 may receive input from a user and also display an output of the computation performed by the processor 502. In this document, the terms "computer program product" and "computer-readable medium" may be used generally to refer to media such as, for example, the memory 506, the storage devices 508, the removable storage unit 514, or signal(s) on the channel 520. These and other forms of computer-readable media may be involved in providing one or more sequences of one or more instructions to the processor 502 for execution. Such instructions, generally referred to as "computer program code" (which may be grouped in the form of computer programs or other groupings), when executed, enable the computing system 500 to perform features or functions of embodiments of the present invention.

In an embodiment where the elements are implemented using software, the software may be stored in a computer-readable medium and loaded into the computing system 500 using, for example, the removable storage unit 514, the media drive 510 or the communications interface 518. The control logic (in this example, software instructions or computer program code), when executed by the processor 502, causes the processor 502 to perform the functions of the invention as described herein.

As will be appreciated by those skilled in the art, the techniques described in the various embodiments discussed above are not routine, or conventional, or well understood in the art. The techniques discussed above provide for innovative solutions to address the challenges associated with updating and modifying the attributes stored in the eWallet.

The disclosed techniques offer several advantages over the existing methods as listed in below paragraphs.

The present disclosure introduces a method and a system enabling attribute management without data transmission. Attributes can be renewed, updated, or extended without being transmitted over a communication channel between the credential issuer system and the eWallet.

The present disclosure introduces a method for reliable self-update proof that is generated securely on the wallet, ensuring the integrity of updates without external exposure.

The present disclosure introduces a method for no risk of privacy infringement through eavesdropping, as attribute values are not transmitted during updates.

The present disclosure provides a method and a system for Efficient Communication Flow as the exchange between the credential issuer system and the eWallet is concise, significantly reducing the bandwidth required for updates.

The present disclosure introduces an eWallet that cannot modify attributes without the credential issuer system consent. Unauthorized modifications result in invalid proofs since the updated root hash or signature would not match those recorded in the public repository.

The present disclosure enhances user interaction by reducing delays, simplifying updates, and ensuring seamless credential management.

The present disclosure introduces eWallets equipped with self-update functionality that may offer premium services, creating monetization opportunities for service providers.

The present disclosure introduces a system and a method that aligns with existing standards such as ISO 18013-5 and ISO 23220-3 and integrates easily with OpenID4CI protocols, offering a modernized alternative to legacy system.

The disclosed techniques offer several applications as listed in below paragraphs.

The dual eSIM system may be applicable for Government-issued Digital Identification (ID), updating credentials like passports, national IDs, and driver's licenses stored on eWallets.

The method and system may be used in Healthcare Systems, managing health-related credentials such as vaccination records or insurance statuses.

The system may be used in education and Certification, updating student IDs, diplomas, and professional certifications efficiently.

The method and system may be used in Financial Services, securely managing and updating Know Your Customer (KYC) credentials for banking or investment services.

The method and system may be used in Corporate Applications, managing Employee ID for access control and professional credentials.

The method and system may be used in Digital Travel Credentials, ensuring the validity of digital boarding passes or visas stored within travel apps.

The method and system may be used in Cryptographic Credential Platforms, extending to decentralized identities and blockchain-based credentials to align with emerging privacy-preserving identity ecosystems.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

It is to be understood that the above description is intended to be illustrative, and not restrictive. For example, the above-discussed embodiments may be used in combination with each other. Many other embodiments will be apparent to those of skill in the art upon reviewing the above description.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

The benefits and advantages which may be provided by the present invention have been described above with regard to specific embodiments. These benefits and advantages, and any elements or limitations that may cause them to occur or to become more pronounced are not to be construed as critical, required, or essential features of any or all of the embodiments.

While the present invention has been described with reference to particular embodiments, it should be understood that the embodiments are illustrative and that the scope of the invention is not limited to these embodiments. Many variations, modifications, additions, and improvements to the embodiments described above are possible. It is contemplated that these variations, modifications, additions, and improvements fall within the scope of the invention.

**Claims**

1. A method (400) for managing attributes (304) in an electronic wallet (eWallet) (114), the method (400) comprising:

   transmitting, by the eWallet (114), a request corresponding to modify one or more attributes (304) to a credential issuer system (116);
   receiving, by the eWallet (114), an updated root hash and a signature corresponding to the one or more attributes (304) based on the request;
   verifying, by the eWallet (114), the signature using a public key issued by the credential issuer system (116), wherein the public key is stored on a public repository (120); and
   updating, by the eWallet (114), the one or more attributes (304) based on the updated root hash and the signature.

2. The method (400) according to claim 1, further comprising:

   storing, by the eWallet (114), the one or more attributes (304) in a merkle tree (300) as hashed values, wherein the merkle tree (300) includes a root hash (302) and a corresponding signature.

3. The method (400) according to claims 1 and 2, wherein receiving the updated root hash and the signature further comprising at least one of:

   transmitting, by the eWallet (114), a pre-authorized code along with a secret acquired out of bound (OOB) and asserting holder binding to verify the authenticity of the eWallet (114); and
   verifying and authenticating, by the credential issuer system (116), the eWallet (114) and a user of the eWallet (114) to verify the authenticity of the eWallet (114).

4. The method (400) according to any of the previous claims, wherein updating the one or more attributes (304) comprising:

   generating, by the eWallet (114), updated hash values corresponding to the one or attributes (304) based on the updated root hash; and
   generating, by the eWallet (114), an updated merkle tree based on the updated hash values and the signature.

5. The method (400) according to any of the previous claims, further comprising:
   generating, by the eWallet (114), a proof of validity corresponding to the modification of the one or more attributes (304), wherein the proof of validity is verified by the credential issuer system (116).

6. A system (100) for managing attributes (304) in an electronic wallet (eWallet) (114), the system (100) comprising:

   a processor (104); and
   a memory (106) communicatively coupled to the processor (104), wherein the memory (106) stores processor-executable instructions, which, on execution, cause the processor (104) to:

   transmit a request corresponding to modify one or more attributes (304) to a credential issuer system (116);
   receive an updated root hash and a signature corresponding to the one or more attributes (304) based on the request;
   verify the signature using a public key, wherein the public key is stored on a public repository (120); and
   update the one or more attributes (304) based on the updated root hash and the signature.

7. The system (100) according to claim 6, wherein the processor executable instruction further cause the processor (104) to store the one or more attributes (304) in a merkle tree (300) as hashed values, wherein the merkle tree (300) includes a root hash (302) and a corresponding signature.

8. The system (100) according to claims 6 and 7, wherein to receive the updated root hash and the signature, the processor executable instruction causes the processor (104) to perform at least one of:

transmit a pre-authorized code along with a secret acquired out of bound (OOB) and asserting holder binding to verify the authenticity of the eWallet (114); and

verify and authenticate the eWallet (114) and a user of the eWallet (114) to verify the authenticity of the eWallet (114).

9. The system (100) according to any of the previous claims, wherein to update the one or more attributes (304), the processor executable instruction causes the processor (104) to:

generate updated hash values corresponding to the one or attributes (304) based on the updated root hash; and

generate an updated merkle tree based on the updated hash values and the signature.

10. The system (100) according to any of the previous claims, wherein the processor executable instruction further cause the processor (104) to generate a proof of validity corresponding to the modification of the one or more attributes (304), and wherein the proof of validity is verified by the credential issuer system (116).

11. A non-transitory computer-readable medium (500) storing computer-executable instructions for managing attributes (304) in an electronic wallet (eWallet) (114), the computer-executable instructions configured for:

transmitting a request corresponding to modify one or more attributes (304) to a credential issuer system (116);

receiving an updated root hash and a signature corresponding to the one or more attributes (304) based on the request;

verifying the signature using a public key, wherein the public key is stored on a public repository (120); and

updating the one or more attributes (304) based on the updated root hash and the signature.

12. The non-transitory computer-readable medium (500) according to claim 11, wherein the computer-executable instructions are further configured for:

storing the one or more attributes (304) in a merkle tree (300) as hashed values, wherein the merkle tree (300) includes a root hash (302) and a corresponding signature.

13. The non-transitory computer-readable medium (500) according to claims 11 and 12, wherein to receive the updated root hash and the signature, the computer-executable instructions are further configured for at least one of:

transmitting a pre-authorized code along with a secret acquired out of bound (OOB) and asserting holder binding to verify the authenticity of the eWallet (114); and

verifying and authenticating the eWallet (114) and a user of the eWallet (114) to verify the authenticity of the eWallet (114).

14. The non-transitory computer-readable medium (500) according to any of the previous claims, wherein to update the one or more attributes, the computer-executable instructions are further configured for:

generating updated hash values corresponding to the one or attributes (304) based on the updated root hash; and

generating an updated merkle tree based on the updated hash values and the signature.

15. The non-transitory computer-readable medium (500) according to any of the previous claims, wherein the computer-executable instructions are further configured for:

generating a proof of validity corresponding to the modification of the one or more attributes (304), wherein the proof of validity is verified by the credential issuer system (116).

FIG. 1

EP 4 760 619 A1

200

## Memory 106

| Storing Module 202 | Request Transmitting Module 204 | eWallet Verification Module 206 |

| Receiving Module 208 | Signature Verification Module 210 | Updating module 212 |

| Proof generation module 214 |

## FIG. 2

Root_AH — 302

HL1.2                     HL1.1

HL2.1        HL2.2        HL2.3        HL2.4 — 306

304-1 — AH1   AH2   AH3   AH4   AH5   AH6   AH7   AH8 — 304-n

300

FIG. 3

17

```mermaid
Start 402
  |
  v
Transmit a request corresponding to modify one or more attributes to a credential issuer system. 404
  |
  v
Receive an updated root hash and a signature corresponding to the one or more attributes based on the request 406
  |
  v
Verify the signature using a public key. 408
  |
  v
Update the one or more attributes based on the updated root hash and the signature. 410
  |
  v
End 414
```

400

FIG. 4

FIG. 5

Europäisches
Patentamt
European
Patent Office
Office européen
des brevets

# EUROPEAN SEARCH REPORT

**Application Number**

EP 24 30 7121

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/080322 A1 (SMITH JONATHAN ROBERT [US] ET AL) 16 March 2023 (2023-03-16) * paragraph [0082] - paragraph [0106]; figures 1-4C * * paragraph [0166] * | 1-15 | INV. G06Q20/36 G06Q20/38 G06Q20/42 H04L9/32 |

-----

**TECHNICAL FIELDS SEARCHED (IPC)**

G06Q
H04L

The present search report has been drawn up for all claims

| Place of search | Date of completion of the search | Examiner |
|---|---|---|
| The Hague | 10 March 2025 | Raymaekers, Jens |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**EP 4 760 619 A1**

## ANNEX TO THE EUROPEAN SEARCH REPORT
## ON EUROPEAN PATENT APPLICATION NO.

EP 24 30 7121

This annex lists the patent family members relating to the patent documents cited in the above-mentioned European search report.
The members are as contained in the European Patent Office EDP file on
The European Patent Office is in no way liable for these particulars which are merely given for the purpose of information.

10-03-2025

| Patent document cited in search report | Publication date | Patent family member(s) | Publication date |
|---|---|---|---|
| US 2023080322 A1 | 16-03-2023 | US 2023080322 A1<br>US 2024267378 A1 | 16-03-2023<br>08-08-2024 |

EPO FORM P0459

For more details about this annex : see Official Journal of the European Patent Office, No. 12/82

21